# EUROPEAN PATENT SPECIFICATION

(11) **EP 0 507 563 B1**
(45) Date of publication and mention of the grant of the patent: **18.06.1997**
(21) Application number: 92302859.1
(22) Date of filing: 01.04.1992
(51) Int. Cl.: H04N 1/21, H04N 1/00

(54) **Still image selection and output apparatus having fast access**
Standbildauswahl- und ausgabegerät mit schnellem Zugriff
Dispositif de sélection et de sortie d'images fixes à accès rapide

(30) Priority: 02.04.1991 JP 69966/91; 04.04.1991 JP 71845/91
(43) Date of publication of application: 07.10.1992
(73) Proprietor: SONY CORPORATION, Tokyo 141 (JP)
(72) Inventor: Seki, Yosuke, c/o Patents Division, Shinagawa-ku Tokyo 141 (JP); Matsumoto, Akihiko, c/o Patents Division, Shinagawa-ku Tokyo 141 (JP)
(74) Representative: Pilch, Adam John Michael

(56) References cited:
- EP-A- 0 258 976
- GB-A- 2 095 949
- PATENT ABSTRACTS OF JAPAN vol. 13, no. 436 (P-938)29 September 1989

## Description

This invention relates to still image signal output apparatus which may be utilised in broadcast stations or the like.

The present applicants have previously proposed a still image filing apparatus suitable for producing television programmes in broadcast stations (see, for example, Japanese Laid-Open Patent Publication JP-A-02285868). However, according to this previously-proposed still image filing apparatus, when a magneto-optical disc, for example, is utilised as a record medium, access to the stored still image takes a relatively long time while the magneto-optical disc has a comparatively large storage capacity and can therefore store a large number of still images. For example, when a video signal is recorded in the form of a component digital signal, access for one still image needs several seconds, typically about two seconds. As a result, the transmission of the still image is limited by this access time and cannot be carried out in an interval shorter than the access time. If one still image filing apparatus is simultaneously accessed by a plurality of users, then the access time will be further extended.

European Patent Application EP-A-O 258 976 discloses an image viewing system for medical use, in particular for viewing radiographs, in which a base memory stores data representing a number of images. This data is then processed in an image processor for grey level transformation, spatial filtering and/or image enhancement, before being stored in a display memory for subsequent display.

According to this invention there is provided still image signal output apparatus for connection to at least one still image filing means, the apparatus comprising:
first memory means for storing a data signal representative of a transmission sequence of still image signals from the still image filing means;
second memory means having at least a pair of frame memories each for storing one frame of said still image signals in accordance with said data signal;
third memory means for storing a plurality of frames of said still image signals in accordance with said data signal; and
processor means for controlling supply of a frame of said still image signals stored in said third memory means to said second memory means and a frame of said still image signals stored in said still image filing means to said third memory means in accordance with said data signal when a still image signal is to be stored in said second memory means for output therefrom;
characterised in that said processor means is operable, when said third memory means has no data stored therein, to allow supply of a frame of said still image signals directly from said still image filing means to said second memory means.

A preferred embodiment of the invention provides an improved still image signal output apparatus in which the above shortcomings and disadvantages encountered with the prior art can be overcome or at least reduced. In the preferred apparatus, a still image can be transmitted to a still image filing, display or other apparatus in a shorter time. This advantage can be further increased particularly when a plurality of users are utilising the operation key apparatus simultaneously. Accordingly, the adaptability of the still image signal output apparatus to the production of television programmes or the like can be increased.

The invention will now be described by way of example with reference to the accompanying drawings, throughout which like parts are referred to by like references, and in which:
Figure 1 is a block diagram showing a still image signal output apparatus according to an embodiment of the present invention;
Figures 2A and 2B are flowcharts to which reference will be made in explaining the operation of the still image signal output apparatus shown in Figure 1;
Figures 3A to 3C are schematic diagrams illustrating the storage systems of one frame memory and of a semiconductor memory;
Figures 4A to 4C are schematic diagrams illustrating a procedure for dividing the semiconductor memory; and
Figure 5 is a table showing retrieval of stored contents in the semiconductor memory.

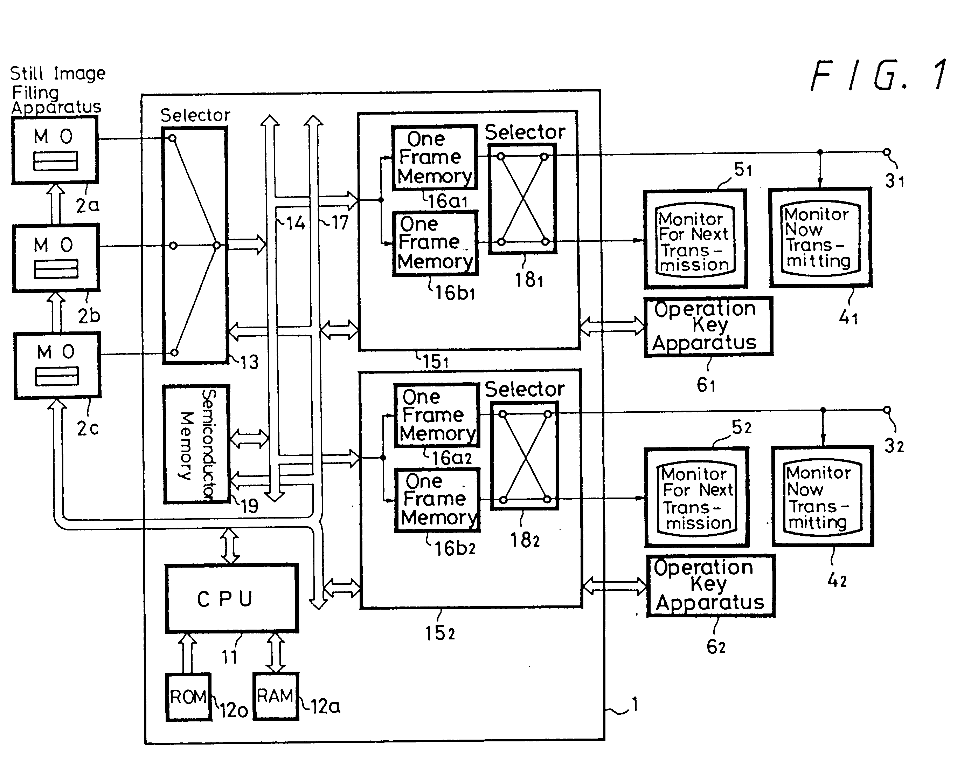

As shown in Figure 1, there is provided a still image signal output apparatus 1, the operation of which is controlled by a central processing unit (CPU) 11. The CPU 11 is provided with a memory 12a in which there are stored data such as a play list indicative of a transmission sequence of still images according to a set scenario or the like, and a memory 12o in which there are stored data such as a protocol of operation of the apparatus or the like. The memory 12a may be formed by a random access memory (RAM) and the memory 12b may be formed by a read-only memory (ROM).

Still image filing apparatus 2a, 2b and 2c are respectively provided with magneto-optical discs (represented by MO in Figure 1). A remote control signal generated from the CPU 11 in the still image signal output apparatus 1 is supplied to these still image filing apparatus 2a, 2b and 2c, from which still images are sequentially derived in accordance with the play list stored in the RAM 12a. The derived still images are supplied to the still image signal output apparatus 1.

Still images supplied from the still image filing apparatus 2a, 2b and 2c are selected by the selector 13 and each selected still image is supplied through a data bus 14 to one-frame memories 16a₁, 16b₁ and 16a₂, 16b₂ of respective output substrates 15₁, 15₂ and written therein. The selection of the still images by the selector 13 and the writing of the selected still images in the one-frame memories 16a₁, 16b₁ and 16a₂, 16b₂ are controlled by signals supplied thereto from the CPU 11 through a control bus 17.

Different play lists for the respective output substrates 15₁, 15₂ are stored in the RAM 12a. Still images A₁, A₂ and following still images B₁, B₂ are respectively written in the one-frame memories 16a₁, 16a₂ and 16b₁, 16b₂ in accordance with these play lists. Still images read out from these one-frame memories 16a₁, 16a₂ and 16b₁, 16b₂ are respectively selected by two-output selectors 18₁ and 18₂ and the selected still images at their first outputs are respectively supplied to still image transmission output terminals 3₁ and 3₂. These still images are also supplied to respective monitor receivers 4₁ and 4₂ during the transmission, and still images selected at the second outputs of the selectors 18₁ and 18₂ are supplied to respective next transmission monitor receivers 5₁, 5₂.

Operation key apparatus 6₁ and 6₂ for each of the substrates 15₁ and 15₂ are provided, and the selection of play lists, the transmission of still images and other functions are controlled by operating key apparatus 6₁ and 6₂.

More specifically, the read-out of data from the one-frame memories 16a₁ and 16b₁ and the selection of the still images by the selector 18₁ are controlled by the control signal from the key apparatus 6₁. In the initial state, the first still image A₁ to be delivered is supplied to the transmission output terminal 3₁ and also supplied to the transmitting monitor receiver 4₁. The next still image B₁ is supplied to the next transmission monitor receiver 5₁. After transmission of the still image selected at the first output terminal of the selector 18₁ has finished, the still images read out from the selected one-frame memories 16a₁, 16b₁ are switched. Simultaneously, an indicating signal indicative of the end of transmission is supplied through the control bus 17 to the CPU 11, and under the control of the CPU 11, the next still image C₁ to be delivered to the first output in accordance with the play list is written into the one of the one-frame memories 16a₁ and 16b₁ at which the still image is not selected.

In a like manner, the read-out of still image from the one-frame memories 16a₂, 16b₂ and the selection of still images by the selector 18₂ are controlled by the control signal from the key apparatus 6₂.

Consequently, under the control of the control signals from the key apparatus 6₁ and 6₂, the still images A₁, B₁, ..... and A₂, B₂, ..... transmitted in accordance with the play list are sequentially written in the one-frame memories 16a₁, 16b₁, 16a₂ and 16b₂, sequentially developed at the transmission output terminals 3₁, 3₂ and supplied to the transmitting monitor receivers 4₁, 4₂. Also, the next still images B₁, C₁, ..... and B₂, C₂, ..... are supplied to the next transmission monitor receivers 5₁, 5₂.

The data bus 14 is also coupled to a semiconductor memory 19 having a storage capacity of a plurality of frames. This semiconductor memory 19 is utilised in co-operation with the one-frame memories under the control of the CPU 11.

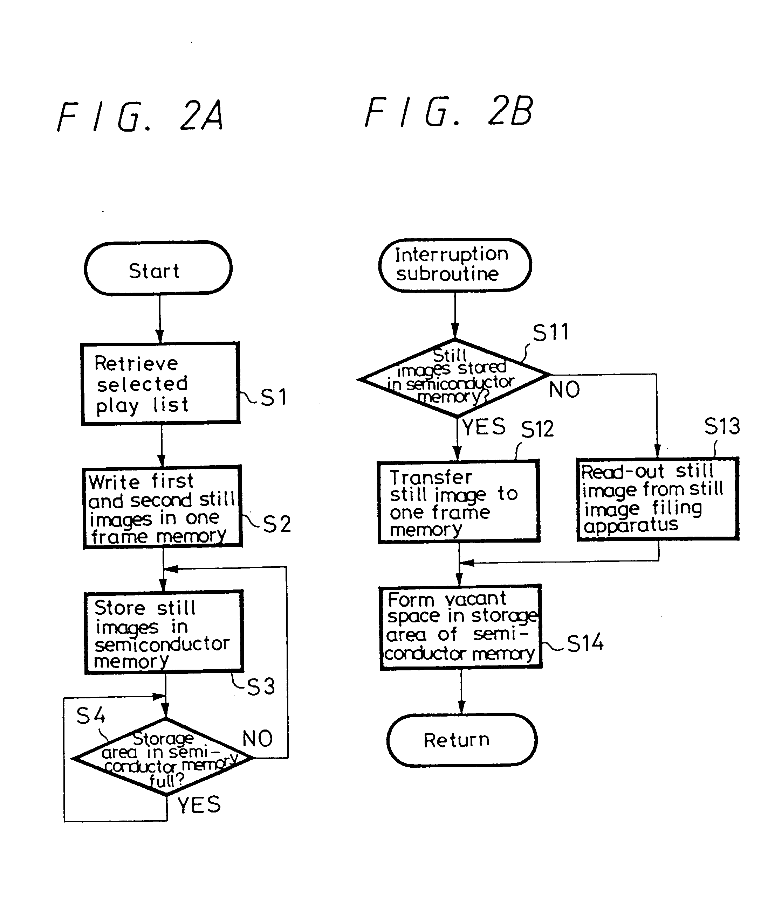

More specifically, the ROM 12o of the CPU 11 has an operation program, for example as shown in the flowcharts forming Figures 2A and 2B. Figure 2A shows a main routine in which, following the Start of operation, the selected play is checked at a step S1. In the next step S2, the first and next still images to be transmitted in accordance with the play list are read out from the still image filing apparatus 2a, 2b and 2c and then written in the one-frame memories 16. In a step S3, further still images to be transmitted in accordance with the play list are read out from the still image filing apparatus 2a, 2b and 2c and then sequentially stored in the semiconductor memory 19. Then, it is determined in a decision step S4 by the CPU 11 whether or not the storage area of the semiconductor memory 19 is full. If the storage area of the semiconductor memory 19 is full as represented by a YES in the decision step S4, then the decision step S4 is repeated. If a NO is provided at the decision step S4, then the processing returns to the step S3.

Figure 2B shows an interruption subroutine, in which an interruption occurs in the main routine when an indicating signal indicative of the end of transmission is supplied to the CPU 11. In the interruption subroutine, as shown in Figure 2B, it is determined in a decision step S11 by the CPU 11 whether or not one or more still images are stored in the semiconductor memory 19. If a still image is stored in the semiconductor memory 19 as represented by a YES at the decision step S11, then the processing proceeds to the next step S12. In the step S12, the still image stored in the semiconductor memory 19 is transferred to one of the one-frame memories 16. If a still image is not stored in the semiconductor memory 19 as represented by a NO at the decision step S11, then the processing proceeds to the next step S13, in which the still images are read out from the still image filing apparatus 2a, 2b and 2c and then written in the one-frame memories 16. At the completion of these steps S11, S12 and S13, a vacant space is formed in the storage area of the semiconductor memory 19 in a step S14 and then the processing returns to the main routine shown in Figure 2A.

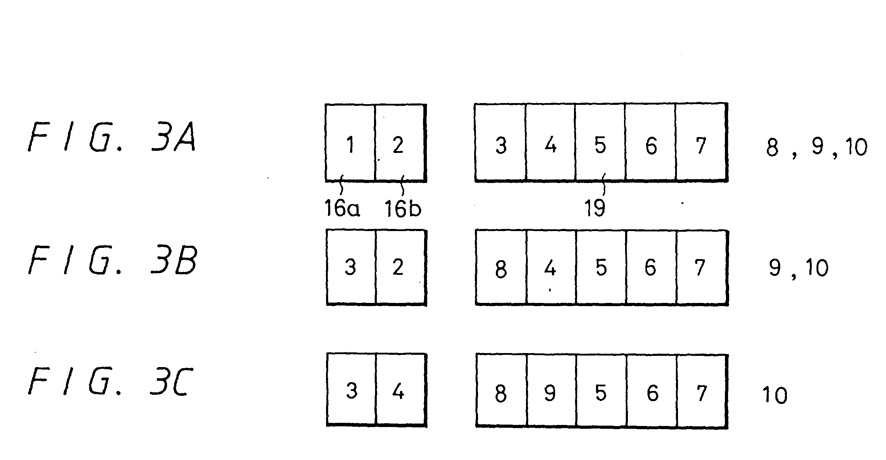

Accordingly, in this apparatus, let the case be considered in which five divided frames of the semiconductor memory 19 are available for one user. In this case, under the condition that the step S3 is ended in the above-mentioned main routine, still images "1" and "2" are written in the respective one-frame memories 16a and 16b and still images "3" to "7" are stored in the semiconductor memory 19, as shown in Figure 3A. After the transmission of the first still image "1" is finished, the still image "3" is transferred from the semiconductor memory 19 to the one-frame memory 16a from which the first still image "1" has already been transmitted, and a succeeding still image "8" is stored in a vacant space formed in the semiconductor memory 19 as shown in Figure 3B. Further, after the transmission of the next still image "2" is finished, the still image "4" is transferred from the semiconductor memory 19 to the one-frame memory 16b from which the still image "2" has already been transmitted, and a succeeding still image "9" is stored in a vacant space formed in the semiconductor memory 19 as shown in Figure 3C.

The still images are sequentially transmitted in this way. In this case, the still images can be transferred from the semiconductor memory 19 to the one-frame memories 16 during one frame period in a direct memory access (DMA) fashion and therefore the transmission of the still images can be carried out in a very short interval. When the semiconductor memory 19 has no data stored therein, the still images can be transmitted directly from the still image filing apparatus 2a, 2b and 2c in similar manner to that previously proposed. Alternatively, when the semiconductor memory 19 has no data stored therein, an alarm message or the like might be displayed on the operation key apparatus 6.

Furthermore, in this still image signal output apparatus 1, when a plurality of output substrates 15₁ and 15₂ are provided and a plurality of operation key apparatus 6₁ and 6₂ are utilised, the semiconductor memory 19 can form divided semiconductor memories in units of frames, for each operation key apparatus 6₁ and 6₂.

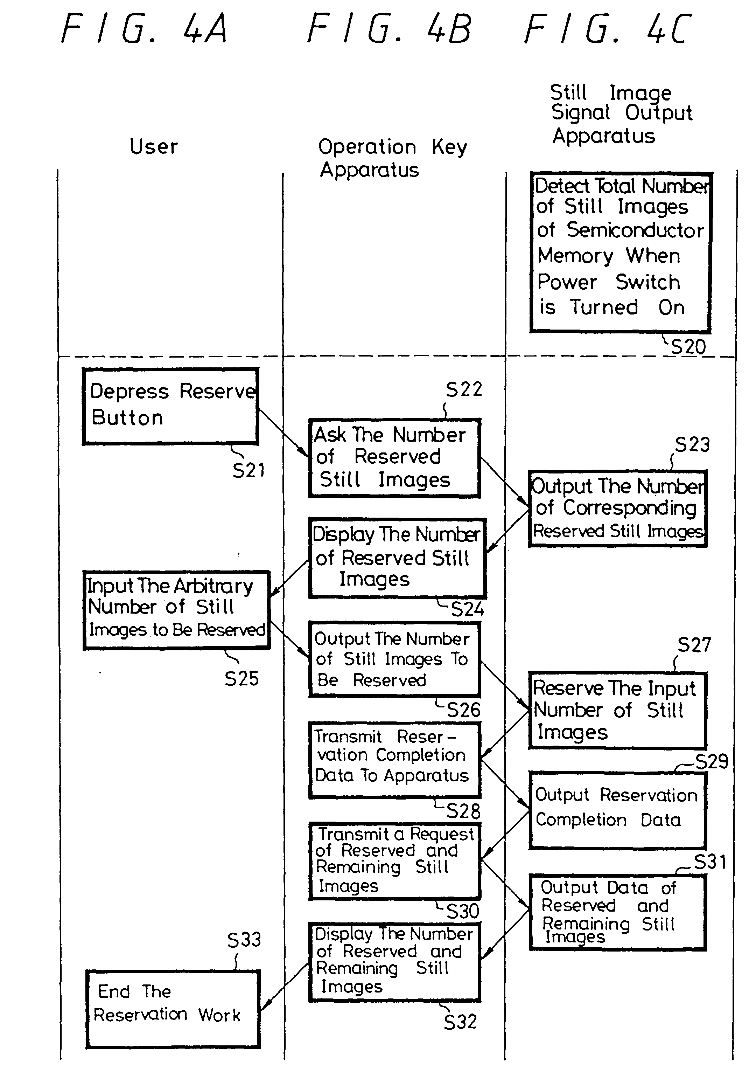

Figures 4A to 4C are diagrams illustrating the procedure of dividing the semiconductor memory 19, in which Figure 4A shows the manipulation of the user, Figure 4B shows the operation of the operation key apparatus 6 and Figure 4C shows the operation of the still image signal output apparatus.

As illustrated, when the power switch is turned on, the storage capacity (total number of still images that can be stored in units of frames) of the semiconductor memory 19 is detected by the still image signal output apparatus 1 in a step S20. When the user depresses a reserve button (not shown) of the operation key apparatus 6 at a step S21, the operation key apparatus 6 interrogates the still image signal output apparatus 1 for the number of reserved still images present in a step S22. The number of reserved still images for each operation key apparatus 6 is stored in the still image signal output apparatus 1, and the number of the reserved still images is supplied to the operation key apparatus 6 in a step S23. Then, in a step S24, the number of reserved still images is displayed on the display unit of the operation key apparatus 6 and a message "How many still images reserved?" is also displayed on the display unit. In this case, if the user inputs a zero number of still images, then all reservations are released.

Further, if the user inputs a particular number of still images to be reserved, then data indicative of the number of still images input from the operation key apparatus 6 is output to the still image signal output apparatus 1 in a step S26. Thus, in the next step S27, the input number of still images is reserved from the total number of still images available in the still image signal output apparatus 1. Furthermore, the operation key apparatus 6 transmits data indicative of reservation completion to the still image signal output apparatus 1 in a step S28, and then the still image signal output apparatus 1 outputs a signal indicative of the end of reservation in a step S29. In the next step S30, the operation key apparatus 6 transmits the reserved number of still images and the number of remaining still images to the still image signal output apparatus 1. Then, the still image signal output apparatus 1 outputs these numbers to the operation key apparatus 6 in a step S31, and the operation key apparatus 6 displays the number of reserved still images and the number of remaining still images on the display unit thereof at a step S32. Then the reservation operation in the semiconductor memory 19 is terminated in a step S33.

In the above-described apparatus, the semiconductor memory 19 may be composed of a plurality of printed circuit boards and the storage capacity (total number of still images that can be stored in units of frames) is detected by detecting the number of circuit boards installed. That is, if N represents the storage capacity of one printed circuit board in units of frames and M represents the number of circuit boards installed, then the total number of frames will be NM. When the operation key apparatus 6 reserves P still images, then the number of remaining still images which can be reserved by the or each other operation key apparatus 6 is:
NM - P still images (P ≤ NM).

Further, the or each other operation key apparatus 6 can learn the number (NM - P) of remaining still images that can be reserved and the other operation key apparatus 6 can reserve the still images in a range of NM - P still images. Also, each of the operation key apparatus 6 has a function to cancel the reservation so that a plurality of operation key apparatus 6 can readily allocate the NM available still images.

A remaining storage portion (NM - ΣP still images) of the semiconductor memory 19 after dividing (reserving) will now be described. In this case, the still images read out from the still image filing apparatus 2a, 2b and 2c are stored in the one-frame memories 16 (16a₁, 16b₁ and 16a₂, 16b₂) and in the semiconductor memory 19 at the divided (reserved) portion thereof. Simultaneously, the still images are sequentially stored in the remaining portion (NM - ΣP still images) of the semiconductor memory 19. If the storage area of the remaining portion is fully occupied, then the still images stored in the remaining portion are rewritten in the sequential order of the still image stored first.

That is, when the total number of the semiconductor memories 19 is twenty, for example, and five semiconductor memories 19 are reserved by each of the operation key apparatus 6₁ and 6₂, then ten semiconductor memories 19 are left as the remaining storage areas in which ten still images read out from the still image filing apparatus 2a, 2b and 2c are stored.

Thus, when the same still image is sequentially requested by the two operation key apparatus 6₁ and 6₂, for example, the still images read out from the still image filing apparatus 2a, 2b and 2c are stored in the one-frame memory 16 of one operation key apparatus 6 or in the reserved portion of the semiconductor memory 19 and simultaneously stored in the remaining storage portion of the semiconductor memory 19. Then, the still images stored in the remaining portion of the semiconductor memory 19 are read out and then stored in the one-frame memory 16 of the other operation key apparatus 6 or in the reserved portion of the semiconductor memory 19. As a result, the number of accesses to the still image filing apparatus 2a, 2b and 2c can be reduced and the operation speed of the entire apparatus can be increased.

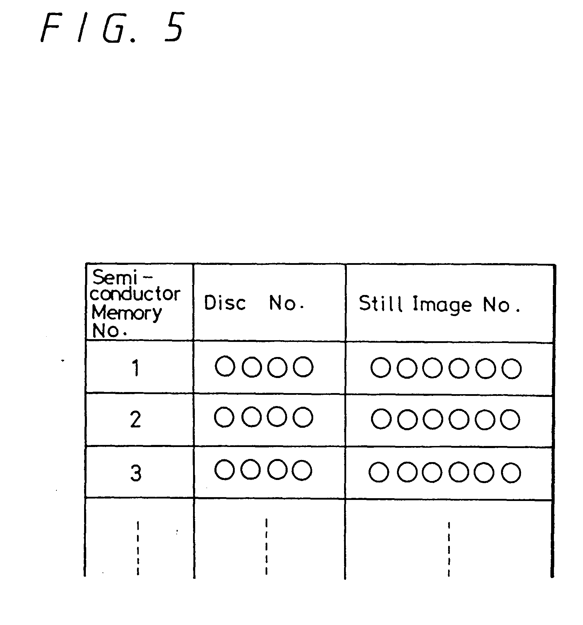

Further, for the still images stored in the semiconductor memory 19, a list in which stored contents as shown, for example, in Figure 5 are written is provided in the RAM 12a. More specifically, the disc numbers of the magneto-optical (MO) discs in which the original still images are recorded and the still image numbers stored in response to the frame numbers of the semiconductor memory 19 are written on this list.

When new still images are read out from the still image filing apparatus 2a, 2b and 2c in accordance with the play list by the instructions from the operation key apparatus 6₁ and 6₂, for example, the list in which the stored contents thereof are written is retrieved. Only when the requested still images are not already stored in the semiconductor memory 19, the still images are then read out from the still image filing apparatus 2a, 2b and 2c. When the requested still images are already stored in the semiconductor memory 19, they need not be read out from the still image filing apparatus 2a, 2b and 2c since the still images stored in the semiconductor memory 19 can then be transferred to the one-frame memories 16a₁, 16b₁ and 16a₂, 16b₂ and to the semiconductor memory 19 at the divided (reserved) portions.

As a consequence, unnecessary access to the still image filing apparatus 2a, 2b and 2c is eliminated, which can further increase the operation speed of the apparatus.

Still images transferred from the semiconductor memory 19 are not limited to those simultaneously stored in the remaining portion of the semiconductor memory 19, and still images stored in the portions reserved by its own and other operation key apparatus 6₁ and 6₂ may also be retrieved. Thus, when the same still image is to be read out to the same one-frame memory 16 on the same substrate, access to the still image filing apparatus 2a, 2b and 2c is inhibited.

When the above-described arrangement is realised, the following countermeasures should be taken in order to prevent incorrect still images from being read out from the semiconductor memory 19:
(1) when the magneto-optical (MO) discs are ejected from the still image filing apparatus 2a, 2b and 2c, then still images of the frames having the same disc numbers on the semiconductor memory 19 should be deleted;
(2) when the discs are formatted again, then still images of the frames having the same image numbers on the semiconductor memories 19 should be deleted;
(3) when a still image on the disc is deleted, then a still image of the frame having the same still image number on the semiconductor memory 19 should be deleted;
(4) when a still image number is varied, then still images of frames having varied still image numbers and having still image numbers to be varied on the semiconductor memory 19 should be deleted; and
(5) when a still image is varied, then a still image of the frame having the same still image number on the semiconductor memory 19 should be deleted.

According to the above-mentioned countermeasures, it is possible to prevent incorrect still images from being read out from the semiconductor memory 19.

As described above, when access to the still image filing apparatus 2a, 2b and 2c is made, if it is determined by the retrieval of the stored contents in the semiconductor memory that the requested still image is already stored in the semiconductor memory 19, then this still image is read out from the semiconductor memory 19, which can reduce the number of accesses to the still image filing apparatus 2a, 2b and 2c. Therefore, the advantages of this still image signal output apparatus are considerable, particularly when a plurality of users utilise the operation key apparatus 6₁ and 6₂ simultaneously, and also the adaptability of the still image signal output apparatus to the production of television programmes or the like can be increased.

While two output substrates 15 are provided in this embodiment, the number can be set as required, and six output substrates may be provided as a maximum in typical apparatus in which the value of N is 21, the value of M is 4 and therefore the value of NM is 84.

## Claims

1. Still image signal output apparatus for connection to at least one still image filing means (2a, 2b, 2c), the apparatus comprising:
first memory means (12a) for storing a data signal representative of a transmission sequence of still image signals from the still image filing means (2a, 2b, 2c);
second memory means (16) having at least a pair of frame memories each for storing one frame of said still image signals in accordance with said data signal;
third memory means (19) for storing a plurality of frames of said still image signals in accordance with said data signal; and
processor means (11) for controlling supply of a frame of said still image signals stored in said third memory means (19) to said second memory means (16) and a frame of said still image signals stored in said still image filing means (2a, 2b, 2c) to said third memory means (19) in accordance with said data signal when a still image signal is to be stored in said second memory means (16) for output therefrom;
characterised in that said processor means (11) is operable, when said third memory means (19) has no data stored therein, to allow supply of a frame of said still image signal directly from said still image filing means (2a,2b,2c) to said second memory means (16).

2. Apparatus according to claim 1, comprising two output terminals wherein said second memory means (16) includes two pairs of said frame memories to supply still image signals to the corresponding output terminals and said first memory means (12a) is operable to store two data signals each representative of a transmission sequence of frames of the still image signals supplied to respective terminals.

3. Apparatus according to claim 2, wherein said third memory means (19) has two divided storage areas and image signals corresponding to respective data signals are stored in respective ones of said two storage areas.

4. Apparatus according to claim 2 or claim 3, wherein, when an instruction is received by said processor means (11) to read out from said still image filing means (2a,2b,2c) a frame of said still image signals that is already stored in said third memory means (19), said processor means (11) is operable to retrieve that frame of said still image signals from said third memory means (19) instead when still image data are to be supplied to both output terminals in accordance with said two data signals, and to inhibit the instructed frame of said still image signals from being read out from said still image filing means (2a, 2b, 2c).

## Patentansprüche

1. Standbild-Signalausgabegerät zur Verbindung mit zumindest einer Standbild-Archivierungseinrichtung (2a, 2b, 2c), wobei das Gerät aufweist:
einen ersten Speicher (12a) zum Speichern eines Datensignals, welches stellvertretend für eine Übertragungsfolge von Standbildsignalen aus der Standbild-Archivierungseinrichtung (2a, 2b, 2c) ist;
einen zweiten Speicher (16), der zumindest ein Paar von Teilbildspeichern - ein jeder zum Speichern eines Teilbildes der Standbildsignale gemäß dem Datensignal - besitzt;
einen dritten Speicher (19) zum Speichern mehrerer Teilbilder der Standbildsignale gemäß dem Datensignal; und
einen Prozessor (11) zum Steuern der Lieferung eines Teilbildes der Standbildsignale, die im dritten Speicher (19) gespeichert sind, zum zweiten Speicher (16), und eines Teilbildes der Standbildsignale, die in der Standbild-Archivierungseinrichtung (2a, 2b, 2c) gespeichert sind, zum dritten Speicher (19) gemäß dem Datensignal, wenn ein Standbildsignal im zweiten Speicher (16) zur Ausgabe daraus gespeichert werden soll;
**dadurch gekennzeichnet,** daß der Prozessor (11) betriebsfähig ist, wenn im dritten Speicher (19) keine Daten gespeichert sind, die Lieferung eines Teilbildes der Standbildsignale unmittelbar von der Standbild-Archivierungseinrichtung (2a, 2b, 2c) zum zweiten Speicher (16) zu erlauben.

2. Gerät nach Anspruch 1, welches zwei Ausgangsanschlüsse besitzt, wobei der zweite Speicher (16) zwei Paare der Teilbildspeicher aufweist, um Standbildsignale zu dem entsprechenden Ausgangsanschlüssen zu liefern, und der erste Speicher (12a) betriebsfähig ist, zwei Datensignale zu speichern, wobei ein jedes für eine Übertragungsfolge von Teilbildern der Standbildsignale, die zu den entsprechenden Anschlüssen geliefert werden, stellvertretend ist.

3. Gerät nach Anspruch 2, wobei der dritte Speicher (19) zwei unterteilte Speicherbereiche hat, und Bildsignale, die den entsprechenden Datensignalen entsprechen, in entsprechenden der beiden Speicherbereiche gespeichert sind.

4. Gerät nach Anspruch 2 oder 3, wobei, wenn eine Anweisung durch den Prozessor (11) empfangen wird, aus der Standbild-Archivierungseinrichtung (2a, 2b, 2c) ein Teilbild der Standbildsignale zu lesen, welches schon im dritten Speicher (19) gespeichert ist, der Prozessor (11) betriebsfähig ist, dieses Teilbild der Standbildsignale statt dessen aus dem dritten Speicher (19) wiederzugewinnen, wenn Standbilddaten zu beiden Ausgangsanschlüssen gemäß den beiden Datensignalen geliefert werden sollen, und um zu verhindern, daß das angegebene Teilbild der Standbildsignale aus der Standbild-Archivierungseinrichtung (2a, 2b, 2c) gelesen wird.

## Revendications

1. Dispositif de sortie de signaux d'images fixes pour liaison à au moins un moyen d'archivage d'images fixes (2a, 2b, 2c), le dispositif comprenant :
des premiers moyens de mémoire (12a) destinés à stocker un signal de données représentatif d'une séquence de transmission de signaux d'images fixes à partir des moyens d'archivage d'images fixes (2a, 2b, 2c) ;
des seconds moyens de mémoire (16) ayant au moins deux mémoires de trame, chacune pour stocker une trame desdits signaux d'images fixes conformément audit signal de données ;
des troisièmes moyens de mémoire (19) destinés à stocker une pluralité de trames desdits signaux d'images fixes conformément audit signal de données ; et
des moyens formant processeur (11) destinés à contrôler la fourniture d'une trame desdits signaux d'images fixes stockée dans lesdits troisièmes moyens de mémoire (19) auxdits seconds moyens de mémoire (16) et d'une trame desdits signaux d'images fixes stockée dans lesdits moyens d'archivage d'images fixes (2a, 2b, 2c) auxdits troisièmes moyens de mémoire (19) conformément audit signal de données lorsqu'un signal d'image fixe doit être stocké dans lesdits seconds moyens de mémoire (16) pour être sorti à partir de ceux-ci ;
caractérisé en ce que lesdits moyens formant processeur (11) sont susceptibles d'être commandés, lorsque aucune donnée n'est stockée dans lesdits troisièmes moyens de mémoire (19), pour permettre la fourniture d'une trame dudit signal d'image fixe directement depuis lesdits moyens d'archivage d'images fixes (2a, 2b, 2c) auxdits seconds moyens de mémoire (16).

2. Dispositif selon la revendication 1, comprenant deux bornes de sortie, dans lequel lesdits seconds moyens de mémoire (16) comprennent deux paires desdites mémoires de trame pour fournir des signaux d'images fixes aux bornes de sortie correspondantes et dans lequel lesdits premiers moyens de mémoire (12a) sont susceptibles d'être commandés pour stocker deux signaux de données, chacun représentatif d'une séquence de transmission de trames des signaux d'images fixes fournis aux bornes respectives.

3. Dispositif selon la revendication 2, dans lequel lesdits troisièmes moyens de mémoire (19) comportent deux zones de stockage d'images divisées et les signaux d'images correspondant aux signaux de données respectifs sont stockés dans les zones respectives desdites deux zones de stockage.

4. Dispositif selon la revendication 2 ou la revendication 3, dans lequel, lorsqu'une instruction est reçue par lesdits moyens formant processeur (11) pour extraire, à partir desdits moyens d'archivage d'images fixes (2a, 2b, 2c), une trame desdits signaux d'images fixes qui est déjà stockée dans lesdits troisièmes moyens de mémoire (19), lesdits moyens formant processeur (11) sont susceptibles d'être commandés pour, plutôt, récupérer cette trame desdits signaux d'images fixes à partir desdits troisièmes moyens de mémoire (19) lorsque des données d'images fixes doivent être fournies aux deux bornes de sortie conformément auxdits deux signaux de données, et pour interdire que ladite trame renseignée desdits signaux d'images fixes soit extraite desdits moyens d'archivage d'images fixes (2a, 2b, 2c).
